(19) **Europäisches Patentamt**
**European Patent Office**
**Office européen des brevets**

(11) **EP 4 653 828 A1**

(12) **EUROPEAN PATENT APPLICATION**

(43) Date of publication:
26.11.2025 Bulletin 2025/48

(21) Application number: 24177409.0

(22) Date of filing: 22.05.2024

(51) International Patent Classification (IPC):
*G01J 3/02* (2006.01)

(52) Cooperative Patent Classification (CPC):
G01J 3/28; G01J 3/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Sentea**
**9052 Gent (BE)**

(72) Inventor: **Dobbelaere, Dieter**
**9052 Gent (BE)**

(74) Representative: **Patentales BV**
**Vennenbos 1A**
**9840 De Pinte (BE)**

(54) **IMPROVED CROSSTALK ATTENUATION**

(57) The invention provides, amongst other aspects, a method for attenuating crosstalk in an optical spectrum, the method comprising the steps of: obtaining the optical spectrum from an optical spectrometer comprising a plurality of channels; and applying a spectral data model on the optical spectrum to alter respective intensity values in the optical spectrum at respective channels relating to the crosstalk, wherein the attenuation of the crosstalk relates to the spectral data model having been optimized based on calibration data, wherein the spectral data model having been optimized relates to minimizing an error between reference optical spectra and measured optical spectra each comprised in said calibration data.

*Fig. 2*

## Description

## Field of the invention

The present invention relates to the technical domain of improved crosstalk attenuation in an optical spectrum from an optical spectrometer, particularly by applying a spectral data model on the optical spectrum to alter respective intensity values in the optical spectrum relating to the crosstalk at respective channels relating to crosstalk.

## Background art

Optical waveguide gratings are essential structures in various fields of optics, particularly in telecommunications, sensors and integrated photonics. One common issue with optical waveguide gratings, especially in optical (de)multiplexers, e.g. in dense wavelength division multiplexing (WDM) systems, and in peak detection systems, is crosstalk. Crosstalk refers to the unwanted transfer of optical power or signal from one waveguide or channel to another. Optical waveguide gratings tend to naturally exhibit inter-channel crosstalk due to inherent manufacturing process variations. Particularly, when implemented in high refractive index contrast platforms, such as silicon, crosstalk can be severe since waveguide roughness induces phase errors, and since surface roughness-inducing impairments in the optical waveguide gratings lead to leakage of energy to different channels. Furthermore, other structures, such as diffraction gratings, e.g. Planar Concave Grating (PCG), also suffer from such crosstalk.

To mitigate the effects of crosstalk in an AWG, one common attempt, as described in US6526203B1, is to increase the width of the output waveguides (having a certain mode profile) to reduce the overlap of the mode profile with the side walls. Another common attempt, as described in US6529649B1, is to cascade optical waveguide gratings. However, these attempts have manufacturing limitations, such as increased fabrication complexity, higher order modes, reduced spectral resolution, increased power loss, and higher sensitivity to fabrication imperfections. Various other manufacturing techniques have been employed to minimize signal distortion in multichannel waveguide systems. However, each approach comes with its limitations, including additional losses, fabrication complexity, limited bandwidth, and potential impact on system performance.

These challenges highlight the need for improved methods that can overcome these limitations.

The present invention aims at addressing issues, such as the issues mentioned above.

## Summary of the invention

According to a first aspect, the present invention provides a method for attenuating crosstalk in an optical spectrum, the method comprising the steps of:

- obtaining the optical spectrum from an optical spectrometer; and

- applying a spectral data model on the optical spectrum to alter respective intensity values in the optical spectrum at respective channels relating to the crosstalk,

    wherein the reduction of crosstalk relates to the spectral data model having been optimized based on calibration data,
    wherein the spectral data model having been optimized relates to minimizing an error between reference optical spectra and measured optical spectra each comprised in said calibration data.

The method of the invention may advantageously provide a fast solution that efficiently reduces the crosstalk drastically and improves accuracy in optical applications, such as peak detection and/or optical (de) multiplexing applications and/or spectral analysis (e.g., channel separation or subtraction spectroscopy), considerably. With this approach it is possible to go beyond the manufacturing limitations. Moreover, it can also allow for more design freedom while achieving similar crosstalk values, for instance, earlier photonics integrated chips (PICs) with older technology having limited design flexibility and integration capabilities compared to more advanced technologies can benefit immensely from attenuation of crosstalk, thereby, allowing the reuse of earlier PICs. Furthermore, the method may provide improved performance and/or accuracy and/or resolution of chip-integrated or integrated photonics spectrometers (e.g., monolithic or microfabricated spectrometers) to the performance level of traditional benchtop or laboratory-grade spectrometers which use a dispersion element, while ensuring a compact size, low power consumption and fast response time. Moreover, the method can effectively improve the optical applications for low spectral resolutions, thereby providing improved use of optical spectra with lower resolutions compared to expensive, advanced, and bulky spectrometers. The optimization of the spectral data model may be performed once, and thereby, reduce the amount of processing that needs to be done for a particular spectrometer.

In embodiments, the optimization of the invention does not relate to minimizing an error. In embodiments, the optimization of the invention is at least partially, or even entirely, based on a technique different from minimizing an error. This may relate to any estimator as known to the skilled person, i.e., any rule for calculating an estimate of a given quantity based on observed data. This may relate to any or any combination of Best linear unbiased estimator (BLUE), Invariant estimator, Kalman filter, Markov chain Monte Carlo (MCMC), Maximum a posteriori (MAP), Method of moments, generalized method of moments, Minimum mean squared error (MMSE), Particle filter, Pitman closeness criterion, Shrinkage estimator, State observer, Testimator, Wiener filter, Well-behaved statistic. Alternatively, or in addition, this may relate to applying any machine learning technique, e.g. relating to clustering, which allows to calculate given quantities based on observed data.

In particularly advantageous embodiments, wherein the optical spectrum comprises respective optical spectra of the respective plurality of channels, wherein the spectral data model is applied on each of the respective optical spectra.

Such embodiments may advantageously allow for each channel to be processed independently of the processing of the other channels. This can allow for parallel processing, and, thereby, provide faster and more efficient attenuation of crosstalk.

In particularly advantageous embodiments, the optical spectrometer has overlapping channels, wherein preferably the respective channels relating to the crosstalk are determined based on the overlap of the channels. More preferably, the method comprises performing peak detection in the optical spectrum with the attenuated crosstalk.

Such embodiments may advantageously ensure that any non-negligible overlap of the channels is not attenuated. Here, the influence of the overlapping channels on each other is considered. This allows the crosstalk to be attenuated, while ensuring that in optical applications, such as peak detection applications, the shape of the peaks would not be affected, particularly not sharpened (i.e., reducing the width of the spectral peak). Furthermore, the spectral data model may be applied on each of the respective optical spectra, while considering the overlap of the channels, thereby, allowing for more efficient processing and, as a result, attenuation of the crosstalk.

According to a second aspect, the present invention provides a device comprising means for carrying out the method according to the invention.

According to a third aspect, the present invention provides a system comprising the device according to the invention and an optical spectrometer, wherein the device is configured to perform the steps of:

- obtaining the optical spectrum from the optical spectrometer comprising a plurality of channels; and
- applying a spectral data model on the optical spectrum to alter respective intensity values in the optical spectrum at respective channels relating to the crosstalk,

  wherein the reduction of crosstalk relates to the spectral data model having been optimized based on calibration data,
  wherein the spectral data model having been optimized relates to minimizing an error between reference optical spectra and measured optical spectra each comprised in said calibration data.

Such a system may advantageously provide improved performance and/or accuracy and/or resolution of chip-integrated or integrated photonics spectrometers (e.g., monolithic or microfabricated spectrometers) to the performance level of traditional benchtop or laboratory-grade spectrometers which use a dispersion element, while ensuring a compact size, low power consumption and fast response time.

According to a fourth aspect, the present invention provides a computer program comprising instructions which, when the program is executed by a computer, cause the computer to carry out the method according to the invention. The computer program product may comprise at least one readable medium in which computer-readable program code portions are saved, which program code portions comprise instructions for carrying out said method.

According to a fifth aspect, the present invention provides a computer-readable medium comprising instructions which, when executed by a computer, cause the computer to carry out the method according to the invention.

Preferred embodiments and their advantages are provided in the description and the dependent claims.

## Brief description of the drawings

The present invention will be discussed in more detail below, with reference to the attached drawings.

Fig. 1 shows a first example method according to the invention.
Fig. 2 shows a second example method according to the invention.
Fig. 3 shows a third example method according to the invention.

## Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

The term "crosstalk" relates to the unwanted transfer or interference of information, including energy, from one channel or system into another in various types of measurement systems, preferably relating to optical spectroscopy. Crosstalk can lead to errors in data analysis and affect the overall accuracy and precision of measurements. In embodiments, crosstalk relates to deterministic crosstalk and/or stochastic crosstalk, preferably the crosstalk relates to deterministic crosstalk, e.g., caused by interference between channels. Herein, the respective wavelengths and/or the respective channels relating to the crosstalk refer to neighboring wavelengths and/or corresponding neighboring channels of the central wavelength for each of the plurality of channels.

The term "channel" relates to different regions within the optical spectrometer that are sensitive to specific wavelengths or energy levels. Thus, a channel is used herein to describe ranges within a spectrum, which may be associated with the spectrometer. It will be understood that the channels may be predefined by the spectrometer and represent specific ranges that the spectrometer is capable of measuring and/or detecting.

The term "detector" refers to an element or device that measures at least the intensity of light which is captured by or falls on the detector. The detector may be comprised in the optical spectrometer or connected to it.

The term "peak" refers to a localized region of an optical spectrum where the intensity of a detected signal is significantly higher than the surrounding wavelengths. Thus, the term "peak detection" refers to detecting the wavelength of a peak. The wavelength of the peak can be, for example, the wavelength of the maximum value of the peak or the wavelength of the center of mass of the peak, etc.

The term "main lobe" refers to a central, major-/primary part of a peak or spectral line. The main lobe may represent the primary distribution of intensity around the peak maximum and may thus relate to a peak shape. Related, the term "side lobes" refers to a minor/secondary, less intense peaks or distributions of intensity on either side of the main lobe in a spectral peak or line. The side lobes may relate to the interference patterns that arise from instrumental factors of the spectrometer, such as crosstalk. Thus, it would be advantageous to minimize the side lobe effects for accurate spectroscopic analysis.

The term "light source" may be any source of visible or invisible light. In embodiments, the light source may relate to at least one of a laser diode (LD), a light emitting diode (LED), a superluminescent LED (SLED), a semiconductor optical amplifier (SOA), a reflective SOA (RSOA), an Erbium-doped fiber amplifier (EDFA), a microresonator-based light source. In embodiments, the light source may include at least one amplifier from the group of an SOA, a RSOA, an EDFA, a Raman amplifier, a travelling-wave optical amplifier (TWA), an optical parametric amplifier (OPA).

In embodiments, the method comprises the steps of:

- obtaining the optical spectrum from at least one optical spectrometer, wherein each of the at least one optical spectrometer comprises a plurality of channels; and
- applying a spectral data model on the optical spectrum to alter respective intensity values in the optical spectrum at respective channels relating to the crosstalk,

  wherein the attenuation of the crosstalk relates to the spectral data model having been optimized based on calibration data,

  wherein the spectral data model having been optimized relates to minimizing an error between reference optical spectra and measured optical spectra each comprised in said calibration data.

In embodiments, the optical spectrum is a raw optical spectrum, which may refer to the measurement of light intensity as a function of wavelength or frequency without any processing or filtering.

In embodiments, the respective channels relating to the crosstalk may concern or may be comprised in the plurality of channels in the optical spectrometer. The respective channels relating to the crosstalk may concern or may be in the plurality of channels in any one or more of the at least one optical spectrometer. In embodiments, the respective channels relating to the crosstalk may concern the respective central wavelength comprised therein.

In embodiments, the calibration data comprises reference optical spectra and/or data relating thereto from the optical spectrometer, for example, a plurality of reference signals. The reference optical spectra and/or the data relating thereto comprise respective intensities for respective wavelengths and/or respective channels for each of the reference signals as input. The calibration data used to optimize the spectral data model may advantageously ensure the accuracy and reproducibility of the optical spectra measurements. In preferred embodiments, the respective reference optical spectra and/or the respective measured optical spectra comprise respective single peaks. Said reference signals may be referred to as single-peak reference signals. The respective single peak may relate to a respective spectrally pure reference signal whose spectral characteristics are predefined and free from significant contamination by other unwanted spectral curves. This may advantageously ensure accurate measurements and reliable attenuation results. For example, respective monochromatic light sources (e.g., lasers) may provide light at respective single predefined wavelengths and/or at respective channels which may be used as respective reference signals comprising respective single peaks. Thus, the calibration data may comprise reference optical spectra and/or data relating thereto from the optical spectrometer, for example, a plurality of single peaks. The method advantageously allows to optimize a spectral data model for the particular optical spectrometer. Therefore, the spectral data model may be unique for each optical spectrometer, thereby ensuring a robust attenuation of the crosstalk.

In embodiments, the calibration data comprises a discretized set of the data relating reference optical spectra from the optical spectrometer, for example, a plurality of discretized reference signals. In embodiments, the optical spectrum obtained from the optical spectrometer comprises a discretized optical spectrum or spectra. Advantageously, the method allows for robust attenuation of crosstalk, regardless of the resolution of the optical spectrometer(s).

In embodiments, the spectral data model comprises a plurality of spectral data models applied on the optical spectrum for the plurality of channels, respectively, wherein each the plurality of spectral data models has been optimized based on the calibration data for the plurality of channels, respectively. Advantageously, this can allow for applying the spectral data models in parallel, thereby, providing more efficient attenuation of crosstalk. For example, for a first channel from among the plurality of channels, a first spectral data model from among the plurality of spectral data models is applied to alter intensity values relating to other channels (and/or wavelengths) from among the plurality of channels relating to crosstalk. Moreover, the optimization of the spectral data models can be performed in parallel, thereby reducing the time of optimization, and, as a result, further reducing the time for attenuating the crosstalk. For example, for a first channel from among the plurality of channels, a first spectral data model from among the plurality of spectral data models is optimized on calibration data, particularly on reference optical spectra and/or data relating thereto.

In embodiments, the calibration data (e.g., the reference optical spectra and/or the data relating thereto) and/or the optical spectrum is obtained by sweeping over all frequencies or wavelengths for each of the plurality of channels. Alternatively, the calibration data (e.g., the reference optical spectra and/or the data relating thereto) and/or the optical spectrum is obtained by sweeping over all the plurality of channels for each of the frequencies or wavelengths.

In embodiments, the optical spectrometer may comprise a plurality of optical spectrometers. The step of obtaining the optical spectrum may comprise concatenating the respective optical spectra obtained from the plurality of optical spectrometers. Thus, the optical spectrum obtained may comprise the optical spectra obtained from the optical spectrometers respectively, preferably a concatenation of the optical spectra. In embodiments, the reference optical spectra from the optical spectrometer comprises a concatenation of reference optical spectra from the plurality of optical spectrometers.

In embodiments, the plurality of channels comprised in the optical spectrometer comprise overlapping channels. For example, the plurality of channels comprised in the optical spectrometer comprise at least 2 overlapping channels, at least 3 overlapping channels, at least 4 overlapping channels, at least 5 overlapping channels, at least 6 overlapping channels, at least 7 overlapping channels, at least 8 overlapping channels, etc. In another example, at least a portion of the plurality of channels comprised in the optical spectrometer are overlapping, such as at least 10%, at least 20%, at least 30%, at least 40% at least 50%, at least 60%, at least 70%, at least 80%, at least 90%, all channels are overlapping. It will be understood that a channel which overlaps another channel results in 2 channels overlapping each other, and that 2 channels overlapping other channels result in overlapping channels of the 2 channels and the other channels.

In embodiments, the optical spectrometer comprises at least 4 channels, at least 8 channels, at least 16 channels, at least 32 channels, at least 64 channels, at least 128 channels, at least 256 channels, at least 512 channels, at least 1024 channels.

In embodiments, each of the plurality of optical spectrometers comprise a plurality of channels. In embodiments, the plurality of channels comprised in each of the optical spectrometers may comprise overlapping channels from among the plurality of channels comprised within each of the optical spectrometers, respectively. Additionally, or alternatively, the plurality of channels comprised in at least one of the optical spectrometers may comprise overlapping channels with the plurality of channels comprised in another at least one of the optical spectrometers. It will be understood that a channel in one optical spectrometer can overlap with another channel in said one optical spectrometer and/or with another channel in another optical spectrometer.

In embodiments, the optical spectrum comprises a plurality of optical spectra. This may be regardless of the number of optical spectrometers comprised in the optical spectrometer. In embodiments, the plurality of optical spectra are obtained from one optical spectrometer.

The term "non-negligible overlap" of channels may refer to a situation where the spectral range of adjacent channels interfere or overlap with each other, where some or all of the light in one channel may be detected by an adjacent channel due to their overlapping spectral ranges. In embodiments, overlap of channels is determined to be non-negligible based on an overlap threshold relating to the degree of overlap. The overlap threshold may be related to the area of overlap and/or to the overlapping range of wavelengths and/or to the signal intensities of the overlapping channel. For example, the overlap threshold or the degree of overlap relates to the area under the spectral curve (e.g., under the main lobe), and is at least 10% thereof, at least 15% thereof, at least 20% thereof, at last 25% thereof, etc. Thus, if the overlap of the channels exceeds the overlap threshold, then the overlap is determined as non-negligible. In another example, the overlap threshold or the degree of overlap relates to the difference in signal intensities of the overlapping channels, and is at least 10% thereof, at least 15% thereof, at least 20% thereof, at least 25% thereof, etc. In embodiments, an intensity of the non-negligible overlap of the channels exceeds a predefined intensity threshold. For example, the predefined intensity threshold is less than or equal to -10 dB, less than or equal to -15 dB, less than or equal to -20 dB, less than or equal to -25 dB, less than or equal to -30 dB, less than or equal to -35 dB, less than or equal to -40 dB, etc. Additionally or alternatively, the predefined intensity threshold is greater than or equal to 10 dB, greater than or equal to 15 dB, greater than or equal to 20 dB, greater than or equal to 25 dB, greater than or equal to 30 dB, greater than or equal to 35 dB, greater than or equal to 40 dB, etc.

Related, the term "negligible overlap" of channels may refer to the situation where the spectral range of adjacent channels interfere or overlap with each other, where the light in one channel may not be detected by an adjacent channel although they have overlapping spectral ranges. In embodiments, overlap of channels is determined to be negligible based on an overlap threshold relating to the degree of overlap. For example, the area under the spectral curve (e.g., under the main lobe), and is at most or less than 15% thereof, at most or less than 10% thereof, at most or less than 5% thereof, at most or less than 1% thereof, etc. Thus, if the overlap of the channels is at most or less than the overlap threshold, then the overlap is determined as negligible. In another example, the degree of overlap relates to the difference in signal intensities of the overlapping channels, and is at most or less than 15% thereof, at most or less than 10% thereof, at most or less than 5% thereof, at most or less than 1% thereof, etc. In embodiments, an intensity of the non-negligible overlap of the channels exceeds a predefined intensity threshold. For example, the predefined intensity threshold is less than or equal to 15 dB, less than or equal to 12 dB, less than or equal to 10 dB, less than or equal to 8 dB, less than or equal to 6 dB, less than or equal to 4 dB, etc. Additionally or alternatively, the predefined intensity threshold is greater than or equal to -15 dB, greater than or equal to -12 dB, greater than or equal to -10 dB, greater than or equal to -8 dB, greater than or equal to -6 dB, greater than or equal to -4 dB etc.

In embodiments, the respective wavelengths and/or the respective channels relating to the crosstalk are determined based on the overlap of the respective channels. In embodiments, the overlap of the respective channels is less than the predetermined intensity threshold. The overlap of the respective channels may be non-negligible, and the respective wavelengths relating to the crosstalk may be determined as being other than the wavelength(s) of the overlapping channels and/or the respective channels relating to crosstalk may be determined as channels which are not overlapping with any other channel. In embodiments, the respective channels relating to the crosstalk have negligible overlap with another channel when the respective central wavelengths of the respective channels correspond to or are comprised in a side lobe of the spectral curve relating to the other channel. Thus, the respective wavelength relating to the crosstalk may correspond to or comprise in the side lobe of the spectral curve relating to the other channel.

In embodiments, the determining of the respective wavelengths and/or the respective channels relating to the crosstalk comprises determining the same based on the calibration data. In embodiments, the (degree of) overlap of channels is determined based on overlap of the channels in the calibration data, preferably in the respective reference optical spectra. In embodiments, the respective channels relating to crosstalk are determined based on a predetermined intensity threshold with respect to the maximum intensity for a respective central wavelength of the respective channels in the calibration data, preferably in the respective reference optical spectra, such as based on the -3dB bandwidth.

In embodiments, at least one of the predetermined attenuation parameters, relating to respective at least one wavelength of the respective overlapping channels, is set to zero, preferably predetermined attenuation parameters $C_{ij}$. In embodiments, the attenuation parameter(s) relating to the channel(s) overlapping any other channel, is(/are) set to zero. Preferably, the channel(s) overlapping the respective channel may have non-negligible overlap. In embodiments, the attenuation parameter(s) relating to the wavelength(s) and/or channel(s) different from the respective wavelengths and/or respective channels are set to zero. In embodiments, the attenuation parameter(s) are determined to be set to zero based on at least one of: 1. the overlap of the neighboring wavelengths and/or channels, relating to said attenuation parameters which are to be set to zero, with the central wavelength and/or channel in the respective reference optical spectrum; 2. at least one of the main lobe and the side lobes of the channel in the respective reference optical spectrum; 3. the intensity value corresponding to the neighboring wavelengths and/or channels, relating to said attenuation parameters which are to be set to zero, is larger than the intensity threshold; 4. the neighboring wavelengths and/or channels, relating to said attenuation parameters which are to be set to zero, have not exceeded the inflection point of intensity.

In embodiments, the method further comprises performing peak detection in the optical spectrum with the attenuated crosstalk. In embodiments, where the plurality of channels comprises overlapping channels, the attenuation of the crosstalk can drastically improve the detection of peaks, since the crosstalk would have otherwise resulted in errors. In embodiments, the method comprises performing spectral analysis (e.g., separation of channels) on the optical spectrum with the attenuated crosstalk. In embodiments, where the plurality of channels comprises overlapping channels, the attenuation of the crosstalk can drastically improve the analysis of the optical spectrum, particularly for channel separation, since the crosstalk would have otherwise resulted in errors.

In embodiments, the channels are non-overlapping. In embodiments, the method further comprises performing wavelength division (de)multiplexing on the optical spectrum with the attenuated crosstalk, wherein the channels are non-overlapping. Peak detection may be performed in the optical spectrum with the attenuated crosstalk, wherein the channels are non-overlapping. Spectral analysis (e.g., channel separation or subtraction spectroscopy) may be performed in the optical spectrum with the attenuated crosstalk, wherein the channels are non-overlapping.

In embodiments, the respective wavelengths relating to the crosstalk are determined based on predetermined side lobes of a main lobe in a channel, preferably of respective main lobe of each of the plurality of channels. The side lobes may be determined based on a predetermined intensity threshold with respect to the maximum intensity for a central wavelength of a channel, preferably for a respective central wavelength of each of the plurality of channels. The maximum intensity may relate to the respective peak in the respective channel. The respective predetermined wavelengths may relate to the respective central wavelengths of the respective channels.

In embodiments, the respective wavelengths relating to the crosstalk are determined as being the wavelengths of the side lobes for each of the respective main lobe. In embodiments, the respective channels relating to the crosstalk are determined as being the channels overlapping any of the side lobes of any of the respective main lobes or channels. In embodiments, the respective main lobe is determined as the width of the spectral curve up to multiples of the predetermined intensity threshold with respect to the maximum intensity, such as at least full width at tenth minimum (FWTM), i.e. the width at the points where its intensity has dropped to at least at 10% of the maximum value on either side of the peak. Other examples include: the width at the points where its intensity has dropped to at least at 2%, 4%, 6%, 8%, 10%, 12%, 14%, 16%, 20%, etc. of the maximum value on either side of the peak. The side lobes of the respective main lobe are determined based on the determined respective main lobe and/or based on the determined respective width of the spectral curve and/or determined as of the multiples of the predetermined intensity threshold with respect to the maximum intensity.

In embodiments, the respective wavelengths and/or the respective channels relating to the crosstalk are determined based on a predetermined intensity threshold with respect to the maximum intensity for the central wavelength of the respective channel, preferably for a respective central wavelength of each of the plurality of channels. The maximum intensity may relate to the respective peak in the respective channel, preferably for a respective central wavelength of each of the plurality of channels. In embodiments, the respective wavelengths and/or the respective channels relating to the crosstalk are determined based on a width of the respective spectral curve (e.g. the respective main lobe) at multiples of the predetermined intensity threshold with respect to the maximum intensity, such as at least full width at tenth minimum (FWTM), i.e. the width at the points where its intensity has dropped to lower than or equal to 10% of the maximum value on either side of the peak. Other examples include: the width at the points where its intensity has dropped to lower than or equal to 2%, 4%, 6%, 8%, 10%, 12%, 14%, 16%, 20%, etc. of the maximum value on either side of the peak. The respective wavelengths and/or the respective channels relating to the crosstalk may be determined based on the determined respective width of the spectral curve and/or determined as of the multiples of the predetermined intensity threshold with respect to the maximum intensity.

In embodiments, the predetermined intensity threshold is determined based on the -3 decibels (dB) bandwidth. The -3 dB bandwidth refers to the width of a spectral curve or response function at the point where its power has dropped by 3 dB relative to its maximum value and may relate to the line shape or peak shape (e.g., the main lobe). In embodiments, the predetermined intensity threshold is determined based on a multiple of the -3 dB bandwidth, such as at least 1.1 times the -3 dB bandwidth, at least 1.2 times the -3 dB bandwidth, at least 1.3 times the -3 dB bandwidth, at least 1.4 times the -3 dB bandwidth, at least 1.5 times the -3 dB bandwidth, at least 1.6 times the -3 dB bandwidth, at least 1.7 times the -3 dB bandwidth at least 1.8 times the -3 dB bandwidth, at least 1.9 times the -3 dB bandwidth, etc. In embodiments, the main lobe may be determined based on the -3 dB bandwidth or multiples thereof (i.e., the width of the spectral curve up to the width at the half maximum power level or multiple thereof). In embodiments, the side lobes may be determined based on the determined main lobe and/or based on the -3 dB bandwidth or multiples thereof.

In embodiments, the respective wavelengths and/or the respective channels relating to the crosstalk are determined based on predetermined respective side lobes of a main lobe in a channel, preferably of respective main lobe of each of the plurality of channels. The side lobes may be determined based on first inflection points of intensities around the maximum intensity for a central wavelength of a channel, preferably for a respective central wavelength of each of the plurality of channels. In embodiments, the respective wavelengths and/or the respective channels relating to the crosstalk are determined based on first inflection points of intensities around the maximum intensity for a central wavelength of a channel, preferably for a respective central wavelength of each of the plurality of channels. These embodiments can provide an alternative approach for determining the wavelengths and/or channels relating to the crosstalk, especially when dealing with complex line shapes. The maximum intensity may relate to the respective peak in the respective channel. In embodiments, the first inflection points are determined as the points where the first-order derivatives of intensity change sign, which indicates a transition from increasing to decreasing intensities or vice versa. Additionally or alternatively, the first inflection points may be determined as the points where the second-order derivatives changes sign, which may indicate a transition in the curvature of the intensities (e.g., a change from a concave to a convex curvature or vice versa). Thus, by knowing either one of the main lobe and the side lobes, the crosstalk, particularly the wavelengths and/or the channels relating thereto, can be better determined. This is highly advantageous when combined with determining crosstalk, particularly the wavelengths and/or the channels relating thereto, based on the overlap of the channels.

In embodiments, the optical spectrometer comprises a plurality of channels, wherein the optical spectrum comprises respective optical spectra of the respective plurality of channels. In embodiments, the optical spectrum is a superposition or concatenation of the respective optical spectra of the respective plurality of channels.

In embodiments, the spectral data model is applied on each of the respective optical spectra. This can allow for parallel processing of each of the respective optical spectra of the respective plurality of channels. In alternative embodiments, the spectral data model is applied on the superposition or concatenation of the respective optical spectra of the respective plurality of channels. This may be advantageous when determining the non-negligible overlap of the channels. In alternative embodiments, the spectral data model has been optimized based on the calibration data comprising the superposition or concatenation of the plurality of reference optical signals and/or data relating thereto.

In embodiments, the optical spectrum(s) consist(s) of measured intensity values. The measured intensity values may correspond to the channels of the spectrometer(s).

In embodiments, the plurality of reference signals is at least 100 reference signals, at least 200 reference signals, at least 300 reference signals, at least 400 reference signals, at least 500 reference signals, at least 600 reference signals, at least 700 reference signals, at least 800 reference signals, at least 900 reference signals, at least 1000 reference signals etc. In embodiments, the plurality of single peaks is at least 100 single peaks, at least 200 single peaks, at least 300 single peaks, at least 400 single peaks, at least 500 single peaks, at least 600 single peaks, at least 700 single peaks, at least 800 single peaks, at least 900 single peaks, at least 1000 single peaks, etc.

In embodiments, the step of applying the spectral data model comprises multiplying a matrix comprising respective predetermined attenuation parameters and a vector comprising the optical spectrum, wherein said spectral data model having been optimized based on calibration data relates to said attenuation parameters $C_{ij}$ having been predetermined based on said calibration data. The step of applying the spectral data model may comprise applying a linear transformation. The step of applying a spectral data model may be written as a linear equation $y = C \cdot x$, where C is an n-by-n matrix and x is an n-by-1 vector, where n is the number of channels. The matrix C may comprise the attenuation parameters $C_{ij}$ having been optimized to determine the respective values of the respective attenuation parameters. In embodiments, the matrix C is constrained to a unit main diagonal $C_{ij}=1$ for all i=j (i.e., diagonal normalization). This is advantageous as it ensures that intensity (e.g., peak) or the area under the spectral curve (e.g., main lobe) remains constant. For example, the matrix

$$C = \begin{pmatrix} 1 & c_{12} & c_{13} \\ c_{21} & 1 & c_{23} \\ c_{31} & c_{32} & 1 \end{pmatrix}$$

, where n=3, where the main diagonal is a unit main diagonal and the parameters $C_{ij}$ for i≠j have been optimized.

In embodiments, the (plurality of) channels are ordered according to increasing wavelengths, such that the respective wavelengths or wavelength ranges of the main lobes or channels are in increasing order. In embodiments, the ordering of the channels is cyclic. Thus, the neighboring channels may refer to the channels neighboring in the index space. For example, a neighboring channel may be a subsequent or a preceding channel in the order or in the row index and/or column index.

In embodiments, the attenuation parameters or $C_{ij}$ for all i≠j and for neighboring channels of the channel on the diagonal (e.g., for i=j-1 and i=j+1, or for i=j-2 and i=j+2, etc.), e.g., which have non-negligible overlap with the channels of the respective optical spectra (i.e., the channels on the diagonal), may be set to zero. In embodiments, attenuation parameters $C_{ij}$ for i≠j have been optimized to determine the respective values thereof.

For example, the matrix

$$C = \begin{pmatrix} 1 & 0 & c_{13} & 0 \\ 0 & 1 & 0 & c_{24} \\ c_{31} & 0 & 1 & 0 \\ 0 & c_{42} & 0 & 1 \end{pmatrix},$$

where n=4, the channels are ordered according to increasing wavelength, and the optical spectrum is cyclical.

The invention is not limited to the matrix C having a unit main diagonal and/or the parameters neighboring the main diagonal being set to zero. Said values of $C_{ij}$ for all i=j and/or $C_{ij}$ for all i≠j and for neighboring channels of the channels on the diagonal, which have non-negligible overlap, may also be optimized to determine their values. For example, the values of $C_{ij}$ for all i=j may have been determined to be close to or equal to 1. In another example, the values of the $C_{ij}$ for all i≠j and for neighboring channels which have non-negligible overlap, may have been determined to be close to or equal to

$$C = \begin{pmatrix} c_{11} & c_{12} & c_{13} \\ c_{21} & c_{22} & c_{23} \\ c_{31} & c_{32} & c_{33} \end{pmatrix}$$

0. For example, , where n=3 and where the parameters $C_{ij}$ have been optimized, such as where the diagonal (i.e., $c_{11}, c_{22}, c_{33}$) may have been determined to be close to or equal to 1.

In embodiments, the spectral data model having been optimized relates to minimizing the mean squared error (MSE) between said reference optical spectra and said measured optical spectra for obtaining said attenuation parameters $C_{ij}$. In embodiments, the attenuation parameters have been determined by minimizing the MSE of the calibration data. Minimizing the MSE in the context of a constrained linear equation problem with calibration data may involve formulating the cost function as the MSE between measured and reference optical spectra or reference data relating thereto. Several other optimization or minimization techniques may also be used, such as root MSE (RMSE), mean absolute error (MAE), Huber loss, mean percentage error (MPE), root relative square error (RRMSE), log loss, and any other optimization or error minimization techniques of the wide range known to the skilled person. By solving the optimization problem while satisfying the given constraints, the best-fit attenuation parameters can be determined for the particular optical spectrometer. The optimization of the spectral data model may allow for efficient use of the computer storage capacity. Furthermore, the optimization, particularly by solving the minimization problem of the mean squared error provides for more efficient computation allowing for the method to be performed on a central processing unit (CPU) rather than on a graphical processing unit (GPU). This can allow for edge computing, where the computation power and the method steps are performed not on a cloud server but on a device located at the edge of the system including the optical spectrometer. For example, the inventor has shown that for n=64 channels and for 1000 single-peak reference signals, the spectral data model can be optimized in 5 seconds on a CPU.

In embodiments, the spectral data model comprises a sequence of linear transformations. In embodiments, the spectral data model comprises a non-linear transformation. For example, the sequence of linear transformations is combined to create a non-linear transformation.

In embodiments, the step of applying the spectral data model comprises applying a non-linear transformation. For example, the spectral data model comprises a machine learning (ML) model or neural network (NN) which has been trained on a dataset of optical measurements (i.e. of historically measured optical spectra) for detecting crosstalk and/or for determining/estimating the intensity of crosstalk. The non-linear spectral data model may be useful, e.g. when combining it with other ML or NN models for particular applications, such as peak detection. The inventor has shown that the linear spectral data model may be more efficient and more stable, compared to a non-linear spectral data model, and that the linear spectral data model can provide a unique solution. This may be due to the use of linear optical spectrometer systems and that the crosstalk may be linearly added.

In embodiments, the device comprises means for carrying out the method according to the invention, may be an edge computing device or a (cloud) server.

In embodiments, the system comprises the device according to the invention and the spectrometer according to the invention. The spectrometer may comprise a plurality of spectrometers, as described herein.

The spectrometer and/or the plurality of spectrometers may comprise any or combination of: diffraction grating based spectrometer(s), Echelle grating based spectrometer(s), planar concave grating (PCG) based spectrometer(s), arrayed waveguide grating (AWG) based spectrometer(s), fiber Bragg grating (FBG) based spectrometer(s)etc. AWG is known for significant crosstalk on silicon photonics technology. Spectra of AWGs tend to naturally exhibit inter-channel crosstalk due to inherent manufacturing process variations. Especially when implemented in high refractive index contrast platforms, such as silicon, crosstalk can be severe as waveguide roughness induces phase errors. As shown in the examples below, crosstalk can be attenuated for spectrometers which exhibit high crosstalk, such as AWG spectrometers.

In embodiments, the at least one optical spectrometer comprises at least one detector, preferably at least one detector array. For example, a first optical spectrometer comprises a first detector array and a

second optical spectrometer comprises a second detector array. The at least one detector array may comprise detectors or detector arrays with different measurement wavelength ranges. For example, a first detector array with a first measurement wavelength range larger than a second measurement wavelength range of a second detector array. The at least one detector or the at least one detector array may comprise a photodiode detector (PD) or a Charge-Coupled Device (CCD) detector, e.g., a PD detector array in a Raman spectrometer.

In embodiments, the at least one optical spectrometer comprises at least one dispersing element. The at least one dispersing element may comprise any of: diffraction grating, Echelle grating, planar concave grating (PCG), arrayed waveguide grating (AWG), etc.

In embodiments, the at least one optical spectrometer relates to a cyclic spectrometer. In embodiments, the optical spectrum is a cyclic optical spectrum.

In embodiments, at least one reflector is configured to receive the light and reflect it back to respective of the at least one dispersing element of the at least one spectrometer. The respective of the at least one reflector may be comprised in or connected to the respective of the at least one spectrometer. The reflector may be a distributed Bragg reflector, e.g., a Fiber Bragg Grating (FBG), configured to reflect articular wavelengths of light, while the other wavelengths of light are transmitted. The reflector may be used as a sensor, e.g., sensitive to temperature. The system may be a measurement or data acquisition system, such as an optical interrogator, which is an optoelectronic instrument comprising an optical FBG sensor.

In embodiments, the system comprises the at least one optical spectrometer further comprising the at least one reflector, wherein the spectrometer receives light from the reflector. An example of the system is a spectrometer-based FBG interrogator, where the reflector is an FBG illuminated by light, and where the spectrometer receives a narrow wavelength band around a Bragg wavelength reflected and guided via an optical circulator to the spectrometer. The spectrometer receives the reflected light through an input interface which may be an (input or output) aperture waveguide. Alternatively, the input interface may be an entrance slit and/or collimator. The spectrometer may be an AWG spectrometer, such as the AWG in document WO2016005418A1, or any other alternative, such as a PCG spectrometer. In a further example, the spectrometer comprises a dispersing element which is an AWG and may be used for wavelength division multiplexing. Alternatively, the spectrometer may be a diffraction grating spectrometer, and the dispersing element in the spectrometer is a diffraction grating which images the sensor spectrum linearly onto the detector being a CD line array. The spectrometer may be configured to provide a spectral output, e.g., values of intensity as a function of CCD detectors per wavelength.

The system may comprise a circulator unit having an optical circulator configured for guiding light to the reflector through an input-output interface of the circulator unit. Furthermore, the optical circulator may be configured to guide light reflected by the reflector back through the input-output interface of the circulator unit to the spectrometer through an output interface of the circulator unit. The spectrometer may receive the reflected light through the input interface. In embodiments, the device and/or the system relate to structural health monitoring, wherein a sensor measurement is provided to the device and/or system. For example, bridges, dams, tunnels and buildings can be equipped with fiber optic sensors for continuous structural health monitoring. Fiber sensors mounted in or onto concrete or steel structures may be used to predict and detect small defects early on. Preventive maintenance can then be performed to avoid structural damage to the infrastructure. In embodiments, the device and/or the system relate to bearing condition monitoring, wherein a sensor measurement is provided to the device and/or system. Bearings may be equipped with fiber optic sensors to bring the benefits of fiber optic sensing to ships, trains, trucks, and heavy construction equipment. Continuous load sensing improves the efficiency of rotating equipment, while lifetime prediction and early failure detection prevent damage to the bearings and more importantly to expensive surrounding parts like gearboxes and engines.

In embodiments, the device and/or the system relate to wind turbines, wherein a sensor measurement is provided to the device and/or system. Fiber optic sensors may be installed on blades, bearings, gearbox, tower, and jacket of wind turbines to predict, detect and prevent failures before they lead to costly repairs. Equally important fiber optic sensors embedded in the blades may be used to monitor and increase the efficiency of the turbine.

According to a further aspect, the present invention provides a computer program comprising instructions which, when the program is executed by a computer, cause the computer to carry out the method for detecting peaks according to the invention. The computer program product may comprise at least one readable medium in which computer-readable program code portions are saved, with program code portions comprising instructions for carrying out said method.

According to a further aspect, the present invention provides a computer-readable medium comprising instructions which, when executed by a computer, cause the computer to carry out the method for detecting peaks according to the invention.

In embodiments, the computer-readable medium is a non-transient computer readable medium containing a computer executable software which when executed on a computer system performs the method as defined herein before by the embodiments of the present disclosure. A non-transient computer readable medium may include an electrical connection having one or more wires, a portable computer diskette, a hard disk, a random-access memory (RAM), a read-only memory (ROM), an erasable programmable read-only memory (EPROM or flash memory), a portable compact disc read-only memory (CD-ROM), an optical storage device, a magnetic storage device, or any suitable combination of the foregoing. In the context of this document, a non-transient computer readable medium may be any tangible medium that can contain or store a program for use by or in connection with an instruction execution system, apparatus, device or module.

In a further aspect of the invention, there is provided a computer-implemented method for optimizing a spectral data model for attenuating crosstalk in an optical spectrum, the method comprising:

- obtaining calibration data comprising reference optical spectra and/or data relating thereto from the optical spectrometer;
- optimizing the spectral data model based on the calibration data,
  wherein the reference optical spectra and/or the data relating thereto correspond to a plurality of channels in the optical spectrometer(s).

In a further aspect of the invention, there is provided a device comprising means for carrying out the method for optimizing the spectral data model according to the invention.

In a further aspect of the invention, there is provided a system comprising a first device for optimizing the spectral data model according to the invention and a second device for attenuating crosstalk in the optical spectrum according to the invention.

In embodiments, the system comprises the spectrometer according to the invention.

In a further aspect of the invention, there is provided a computer program comprising instructions which, when the program is executed by a computer, cause the computer to carry out the method for optimizing the spectral data model according to the invention. The computer program product may comprise at least one readable medium in which computer-readable program code portions are saved, which program code portions comprise instructions for carrying out said method.

In a further aspect of the invention, there is provided a computer-readable medium comprising instructions which, when executed by a computer, cause the computer to carry out the method for optimizing the spectral data model according to the invention.

**Examples**

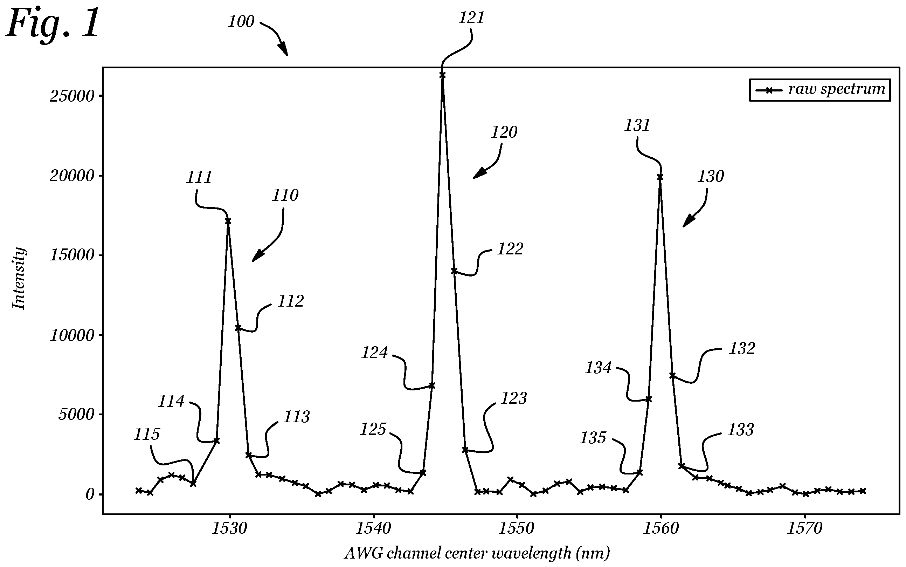

Example embodiments of the invention will be described with reference to Fig. 1, 2 and 3, which are not intended to limit the scope of the invention in any way.

**Example 1: example method according to the invention**

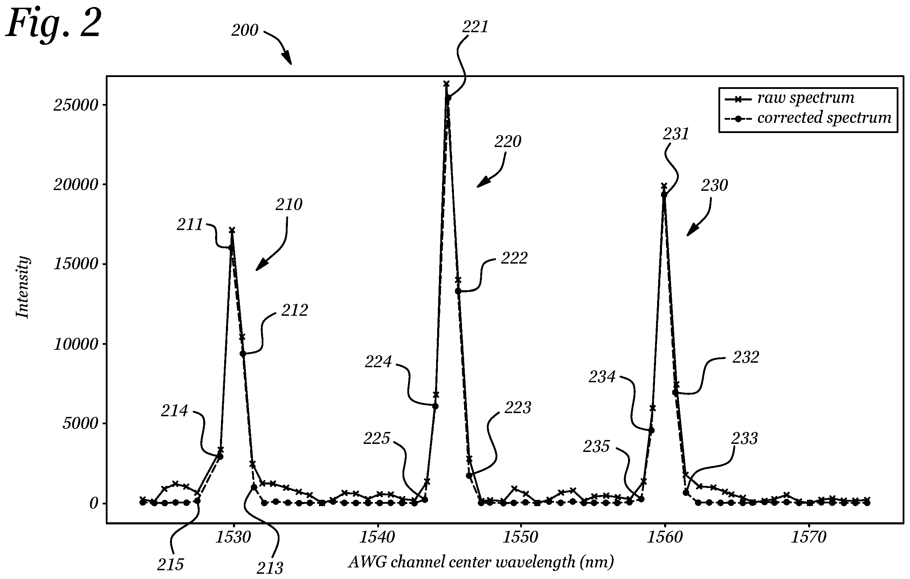

This example is described with reference to Fig. 1 and 2. In this example according to embodiments of the invention, the method for attenuating crosstalk in a (raw) optical spectrum (100), the method comprising the steps of:

- obtaining the optical spectrum (100) from an optical spectrometer comprising a plurality of channels; and

- applying a spectral data model on the optical spectrum (100) to alter respective intensity values in the optical spectrum at respective channels relating to the crosstalk.

Fig. 1 shows the optical spectrum from an AWG-based spectrometer comprising 64 channels, and the optical spectrum (100) comprises a concatenation of a plurality of optical spectra, particularly three optical spectra (110, 120, 130). A first optical spectrum (110) comprises respective measured intensity values for respective wavelengths corresponding to respective channels. The first optical spectrum (110) comprises a peak at a central wavelength 1530 nm corresponding to channel (111). A second optical spectrum (120) comprises respective measured intensity values for respective wavelengths corresponding to respective channels. The second optical spectrum (120) comprises a peak at a central wavelength 1545 nm corresponding to channel (121). A third optical spectrum (130) comprises respective measured intensity values for respective wavelengths corresponding to respective channels. The third optical spectrum (130) comprises a peak at a central wavelength 1560 nm corresponding to channel (131).

In the first optical spectrum (110), the first main lobe centered around the wavelength 1530 nm which corresponds to the channel (111) is overlapped by channels (112, 113, 114, 115). Similarly, in the second optical spectrum (120), the second main lobe centered around the wavelength 1545 nm which corresponds to the channel (131) is overlapped by channels (122, 123, 124, 125). Similarly, in the third optical spectrum (130), the third main lobe centered around the wavelength 1560 nm which corresponds to the channel (131) is overlapped by channels (132, 133, 134, 135).

In the first optical spectrum (110), the first side lobes relate to the channels with corresponding wavelengths smaller than the corresponding wavelength of channel (115) and larger than the corresponding wavelength of channel (113). It can be seen from Fig .1, that the channels (113, 115) relate to the first inflection points from the peak (111). Similarly, in the second optical spectrum (120), the second side lobes relate to the channels with corresponding wavelengths smaller than the corresponding wavelength of channel (125) and larger than the corresponding wavelength of channel (123). The channels (123, 125) relate to the first inflection points from the peak (121). Similarly, in the third optical spectrum (130), the third side lobes relate to the channels with corresponding wavelengths smaller than the corresponding wavelength of channel (135) and larger than the corresponding wavelength of channel (133). The channels (133, 135) relate to the first inflection points from the peak (131).

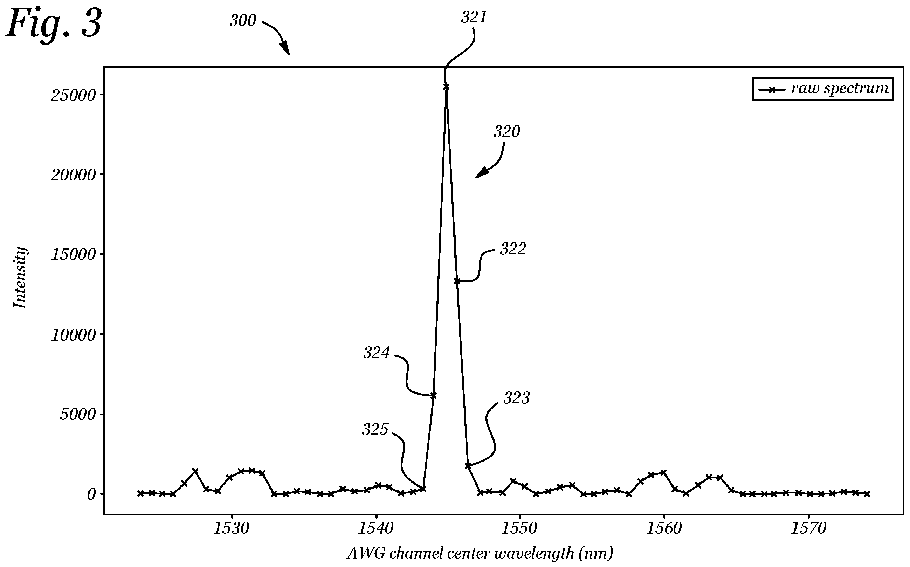

As can be seen in Fig. 1, there is undesirable crosstalk across the channels. One can also see from the reference optical spectra (e.g., a reference optical spectrum of Fig. 3) that even more undesirable crosstalk exists among the peaks or the first, second and third main lobes. The inventor estimates the peak wavelength accuracy to be reduced by around 100 pm, which is an unacceptable error.

Thus, by applying the spectral data model on the optical spectrum (100) the respective intensity values in the optical spectrum (100) at the respective channels relating to the crosstalk, particularly the channels with negligible overlap with the main lobes, i.e., the respective channel relating to the crosstalk at the sidelobes.

Fig. 2 shows an optical spectrum with attenuated crosstalk, herein referred to as a corrected optical spectrum (200). The corrected optical spectrum (200) also comprises a concatenation of the plurality of corrected optical spectra, particularly three corrected optical spectra (210, 220, 230). The first corrected optical spectrum (210) comprises a peak at a central wavelength 1530 nm corresponding to channel (211). A second corrected optical spectrum (220) comprises a peak at a central wavelength 1545 nm corresponding to channel (221). A third corrected optical spectrum (230) comprises a peak at a central wavelength 1560 nm corresponding to channel (231).

As can be seen in the first corrected optical spectrum (210), the intensity values at the channels (211, 212, 213, 214) were altered, since it has been determined that the first main lobe in the first optical spectrum (110) included crosstalk from the second optical spectrum (120), which can be determined from Fig. 3. Similarly, in the second corrected optical spectrum (220), the intensity values at the channels (221, 222, 223, 224) were altered, since it may have been determined that the second main lobe in the second optical spectrum (120) included crosstalk from the first optical spectrum (120) and/or the third optical spectrum (130). Similarly, in the third corrected optical spectrum (230), the intensity values at the channels (231, 232, 233, 234) were altered, since it has been determined that the third main lobe in the third optical spectrum (130) included crosstalk from the second optical spectrum (120), which can be determined from Fig. 3. It must be noted that crosstalk at the side lobes of the first optical spectrum (120) may be crosstalk from the peak at a central wavelength of 1530 nm (corresponding reference optical spectrum not shown) and from the peak at a central wavelength of 1545 nm corresponding to reference optical spectrum (320), as shown in Fig. 3. Similarly, crosstalk at the side lobes of the third optical spectrum (130) may be crosstalk from the peak at a central wavelength of 1560 nm (corresponding reference optical spectrum not shown) and from the peak at a central wavelength of 1545 nm corresponding to reference optical spectrum (320), as shown in Fig. 3.

As can be seen in Fig. 2, the intensity values at the other respective channels, i.e., the channels other than channels (211-214, 221-224, 231-234), relating to the crosstalk have been also altered. For instance, the channel (215) was determined as having a negligible overlap with the first main lobe, i.e., as having a central wavelength in one side lobe of the channel (211). The channels (215, 225, 235) can be seen in Fig. 2 as inflection points. Thus, the channels (215, 225, 235) respectively correspond to a side lobe of the channels (211, 221, 231) and have been altered to attenuate the crosstalk. The same can be seen for the channels with wavelengths smaller than or equal to that of channels (215, 225, 235) and wavelengths larger than that of channels (215, 223, 233),

In this example, the inventor has found that the crosstalk was attenuated by more than 8 dB or a factor of more than 6.3 in power (as shown in Fig. 2).

The attenuation of the crosstalk relates to the spectral data model having been optimized based on calibration data. This is explained in Example 2.

**Example 2: example of calibration data according to the invention**

In this example we consider the spectral data model applied to the optical spectrum of any of Fig. 1 or Fig. 2. This example is described with reference to Fig. 3. In this example according to embodiments of the invention, the attenuation of the crosstalk relates to the spectral data model having been optimized based on calibration data, wherein the spectral data model having been optimized relates to minimizing an error between reference optical spectra and measured optical spectra each comprised in said calibration data.

In this example, the plurality of channels comprises overlapping channels, wherein the respective channels relating to crosstalk are determined based on the overlap of the respective channels, wherein the overlap of the respective channels is non-negligible, wherein at least one of the predetermined attenuation parameters, relating to a respective at least one wavelength of the respective overlapping channels, is set to zero.

As shown in Fig. 3, the calibration data (300) comprises a reference optical spectrum (320) which comprises a single peak at a central wavelength of 1545 nm corresponding to channel (321). In the optical spectrum (320), the channels (322, 323, 324) have non-negligible overlap with the main lobe of channel (321). It is understood that the calibration data (300) comprises a reference optical spectrum for each of the plurality of channels (not shown in Fig. 3).

From the reference optical spectrum (320), the respective channels relating to the crosstalk of channel (321) are determined based on the overlap of the respective channels with the channel (321). For example, the measured intensity value with a wavelength corresponding to channel (325) is determined to be related to the crosstalk of channel (321). This can be based on the determination that the respective wavelength and the corresponding respective channel (325) correspond to or comprise in the side lobe of the spectral curve relating to the channel (321). This can be additionally or alternatively based on the determination of the inflection point of intensity being at the respective wavelength and the corresponding respective channel (325). This can be additionally or alternatively based on the determination that the intensity corresponding to the respective wavelength and the respective channel is below the intensity threshold, e.g., below 5% of the maximum intensity (i.e., that at 1545 nm).

The attenuation parameters relating to the channels (322, 323, 324) neighboring the channel (321) may be set to zero.

The optimization of the respective spectral data model, i.e., for the reference optical spectrum (320), is optimized, particularly the attenuation parameters $C_{ij}$ for $i \neq j$ relating to the respective channels relating to the crosstalk, based on the constraints: $C_{ij}=1$ for all $i=j$; and $C_{ij}=0$ for $i \neq j$ and for neighboring channels which have non-negligible overlap.

With regards to the crosstalk around the wavelengths 1530 nm and 1560 nm, from Fig. 1 and/or 2, it can be seen that said wavelengths relate to peaks (111, 211, 131, 231), particularly those of the first optical spectrum (110, 210) and the third optical spectrum (130, 230). Therefore, it can be determined based on the reference optical spectrum (320) having crosstalk around said wavelengths, that there is peak-to-peak crosstalk, particularly crosstalk from the second peak (121) to the first and third peaks (111, 131) or crosstalk from the second optical spectrum (120) to the first and third optical spectra (110, 130). Thus, by attenuating the crosstalk at these wavelengths (i.e., channels) in the optical spectrum (100), the resulting optical spectrum (200) resulted in slightly lower peaks (211, 231) for the optical spectrum (200), as described in Example 1.

(End of Example 2)

Although the present invention has been described above with reference to certain embodiments thereof, it will be evident that various modifications and changes may be made to these embodiments without departing from the broader scope of the present invention, as defined by the appended claims.

## Claims

1. A method for attenuating crosstalk in an optical spectrum, the method comprising the steps of:

   - obtaining the optical spectrum from an optical spectrometer comprising a plurality of channels; and
   - applying a spectral data model on the optical spectrum to alter respective intensity values in the optical spectrum at respective channels relating to the crosstalk,
   wherein the attenuation of the crosstalk relates to the spectral data model having been optimized based on calibration data,
   wherein the spectral data model having been optimized relates to minimizing an error between reference optical spectra and measured optical spectra each comprised in said calibration data.

2. The method according to claim 1, wherein the respective reference optical spectra and the respective measured optical spectra comprise respective single peaks.

3. The method according to claim 1 or claim 2, wherein the step of applying a spectral data model comprises multiplying a matrix comprising respective predetermined attenuation parameters $C_{ij}$ with a vector comprising the optical spectrum, and wherein said spectral data model having been optimized based on calibration data relates to said attenuation parameters $C_{ij}$ having been predetermined based on said calibration data.

4. The method according to claim 3, wherein the spectral data model having been optimized relates to minimizing the mean squared error between said reference optical spectra and said measured optical spectra for obtaining said attenuation parameters $C_{ij}$.

5. The method according to claim 3 or claim 4, wherein the plurality of channels are ordered according to increasing wavelengths.

6. The method according to any of claims 1-5, wherein the respective channels relating to crosstalk are determined based on a predetermined intensity threshold with respect to the maximum intensity for a respective central wavelength of the respective channels, preferably wherein the predetermined intensity threshold is determined based on the -3 decibels bandwidth.

7. The method according to any of claims 1-6, wherein the optical spectrometer comprises a plurality of channels, wherein the optical spectrum comprises respective optical spectra of the respective plurality of channels, wherein the spectral data model is applied on each of the respective optical spectra.

8. The method according to any of claims 1-7, wherein the plurality of channels comprises overlapping channels, wherein the respective channels relating to crosstalk are determined based on the overlap of the respective channels.

**9.** The method according to claim 8, wherein the overlap of the respective channels is less than the predetermined intensity threshold.

**10.** The method according to claim 8 or claim 9, wherein at least one of the predetermined attenuation parameters, preferably predetermined attenuation parameters $C_{ij}$, relating to a respective at least one wavelength of the respective overlapping channels, is set to zero.

**11.** The method according to any of claims 1-10, further comprising performing peak detection in the optical spectrum with the attenuated crosstalk.

**12.** A device comprising means for carrying out the method of any one of claims 1-11.

**13.** A system comprising:

- a device according to claim 12, and
- a spectrometer,

wherein the device is configured to perform the steps of:

- obtaining the optical spectrum from the optical spectrometer comprising a plurality of channels; and
- applying a spectral data model on the optical spectrum to alter respective intensity values in the optical spectrum at respective channels relating to the crosstalk,
wherein the attenuation of the crosstalk relates to the spectral data model having been optimized based on calibration data,
wherein the spectral data model having been optimized relates to minimizing an error between reference optical spectra and measured optical spectra each comprised in said calibration data.

**14.** A computer program comprising instructions which, when the program is executed by a computer, cause the computer to carry out the method of any one of claims 1-11.

**15.** A computer-readable medium comprising instructions which, when executed by a computer, cause the computer to carry out the method of any one of claims 1-11.

*Fig. 1*

EP 4 653 828 A1

*Fig. 2*

EP 4 653 828 A1

*Fig. 3*

EP 4 653 828 A1

Europäisches
Patentamt

European
Patent Office

Office européen
des brevets

# EUROPEAN SEARCH REPORT

**Application Number**

EP 24 17 7409

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/128654 A1 (LEE SUYEON [KR] ET AL) 27 April 2023 (2023-04-27) * paragraph [0072] - paragraph [0119]; figures * ----- | 1-15 | INV. G01J3/02 |
| A | US 10 648 840 B2 (WESTCO SCIENT INSTRUMENTS INC [US]) 12 May 2020 (2020-05-12) * column 21, line 35 - column 22, line 9; figures * ----- | 1-15 | |

**TECHNICAL FIELDS SEARCHED (IPC)**

G01J

The present search report has been drawn up for all claims

| Place of search | Date of completion of the search | Examiner |
|---|---|---|
| The Hague | 25 October 2024 | Amroun, Sébastien |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 17 7409

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2024

| Patent document cited in search report | | Publication date | Patent family member(s) | | Publication date |
|---|---|---|---|---|---|
| US 2023128654 | A1 | 27-04-2023 | CN | 116012280 A | 25-04-2023 |
| | | | EP | 4174459 A1 | 03-05-2023 |
| | | | JP | 7429931 B2 | 09-02-2024 |
| | | | JP | 2023063240 A | 09-05-2023 |
| | | | KR | 20230057650 A | 02-05-2023 |
| | | | US | 2023128654 A1 | 27-04-2023 |
| | | | US | 2024251181 A1 | 25-07-2024 |
| US 10648840 | B2 | 12-05-2020 | EP | 2841891 A1 | 04-03-2015 |
| | | | US | 10048100 B1 | 14-08-2018 |
| | | | US | 2018340805 A1 | 29-11-2018 |
| | | | WO | 2013163268 A1 | 31-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6526203 B1
- US 6529649 B1

- WO 2016005418 A1